# EUROPEAN PATENT APPLICATION

(11) **EP 4 760 478 A1**
(43) Date of publication of application: **17.06.2026**
(21) Application number: 25806974.9
(22) Date of filing: 14.05.2025
(51) Int. Cl.: G06F 3/14

(54) **DISPLAY METHOD AND ELECTRONIC DEVICE HAVING FOLDABLE SCREEN**

(30) Priority: 22.05.2024 CN 202410652294
(71) Applicant: Huawei Technologies Co., Ltd., Shenzhen, Guangdong 518129 (CN)
(72) Inventor: CHEN, Andong, Shenzhen, Guangdong 518129 (CN); YUAN, Xiuming, Shenzhen, Guangdong 518129 (CN); YANG, Zhuang, Shenzhen, Guangdong 518129 (CN); XU, Yong, Shenzhen, Guangdong 518129 (CN)
(74) Representative: Pfenning, Meinig & Partner mbB
(86) International application number: PCT/CN2025/094863
(87) International publication number: WO 2025/241961

(57) **Abstract**

This application provides a display method and a foldable-screen electronic device. The method includes: displaying a first interface in a portrait layout manner, where when the first interface is displayed in the portrait layout manner, a foldable-screen electronic device is in a folded state and a portrait state, and a display orientation of the first interface is a portrait orientation; switching the display orientation of the first interface to a landscape orientation and displaying the first interface in a landscape layout manner in response to switching from the folded state to an unfolded state; displaying a second interface in the landscape layout manner, where when the second interface is displayed in the landscape layout manner, the foldable-screen electronic device is in the unfolded state, and the second interface is in the landscape orientation; and switching a display orientation of the second interface to the portrait orientation and displaying the second interface in the portrait layout manner in response to switching from the unfolded state to the folded state. According to the display method provided in embodiments of this application, the landscape/portrait layout manner and a display orientation of an interface can be automatically adjusted based on a status of the foldable-screen electronic device, and a user does not need to manually rotate the foldable-screen electronic device.

## Description

This application claims priority to Chinese Patent Application No. 202410652294.X, filed with the China National Intellectual Property Administration on May 22, 2024 and entitled "DISPLAY METHOD AND FOLDABLE-SCREEN ELECTRONIC DEVICE", which is incorporated herein by reference in its entirety.

### TECHNICAL FIELD

This application relates to the field of electronic devices, and more specifically, to a display method and a foldable-screen electronic device.

### BACKGROUND

Currently, an increasing quantity of users start to use foldable-screen electronic devices. Although the foldable-screen electronic device provides a larger screen, there is a problem of poor adaptation in many application scenarios. In addition, to provide a larger display area for the user and ensure that the foldable-screen electronic device can be held by the user with a single hand after being folded, the foldable-screen electronic device gradually evolves into a multi-fold electronic device, that is, may be folded a plurality of times. This poses a greater challenge to adaptation to application scenarios (for example, video playing and navigation). Based on this, how to ensure display effect of the foldable-screen electronic device becomes an urgent technical problem to be resolved.

### SUMMARY

This application provides a display method and a foldable-screen electronic device. When the foldable-screen electronic device is in a folded state and a portrait state, a current interface is displayed in a portrait layout manner. After switching from the folded state to an unfolded state, the foldable-screen electronic device may automatically switch to display the current interface in a landscape layout manner. When the foldable-screen electronic device is in the unfolded state, the current interface is displayed in the landscape layout manner. After switching from the unfolded state to the portrait state, the foldable-screen electronic device may automatically switch to display the current interface in the portrait layout manner. The technical solutions provided in this application can better adapt to a display screen form obtained after the foldable-screen electronic device is unfolded, can better use a screen of the foldable-screen electronic device, and reduce a user operation step. Therefore, a user does not need to manually rotate the device, thereby helping improve user experience.

According to a first aspect, a display method is provided. The method is applied to a foldable-screen electronic device, and the method includes: displaying a first interface in a portrait layout manner, where when the first interface is displayed in the portrait layout manner, the foldable-screen electronic device is in a folded state and a portrait state, and a display orientation of the first interface is a portrait orientation; switching the display orientation of the first interface to a landscape orientation and displaying the first interface in a landscape layout manner in response to switching from the folded state to an unfolded state; displaying a second interface in the landscape layout manner, where when the second interface is displayed in the landscape layout manner, the foldable-screen electronic device is in the unfolded state, and the second interface is in the landscape orientation; and switching a display orientation of the second interface to the portrait orientation and displaying the second interface in the portrait layout manner in response to switching from the unfolded state to the folded state.

In this embodiment of this application, when the foldable-screen electronic device is in the folded state and the portrait state, a current interface is displayed in the portrait layout manner. After switching from the folded state to the unfolded state, the foldable-screen electronic device may automatically switch to display the current interface in the landscape layout manner. When the foldable-screen electronic device is in the unfolded state, the current interface is displayed in the landscape layout manner. After switching from the unfolded state to the portrait state, the foldable-screen electronic device may automatically switch to display the current interface in the portrait layout manner. The technical solutions provided in this application can better use a screen of the foldable-screen electronic device, and reduce a user operation step. Therefore, a user does not need to manually rotate the device, thereby helping improve user experience.

With reference to the first aspect, in some implementations of the first aspect, after switching the display orientation of the first interface to the landscape orientation and displaying the first interface in the landscape layout manner in response to switching from the folded state to the unfolded state, the method further includes: switching the display orientation of the first interface to the portrait orientation and displaying the first interface in the portrait layout manner in response to a rotation angle being greater than or equal to a first threshold.

With reference to the first aspect, in some implementations of the first aspect, before switching the display orientation of the first interface to the portrait orientation and displaying the first interface in the portrait layout manner, the method further includes: determining that the foldable-screen electronic device is a multi-fold electronic device.

In this embodiment of this application, when the multi-fold electronic device is in the unfolded state, an interface may be displayed in the landscape layout manner. After the multi-fold electronic device rotates, the multi-fold electronic device switches from a landscape state to the portrait state. Therefore, the multi-fold electronic device automatically switches to display an interface in the portrait layout manner. This can better adapt to a display screen form obtained after the multi-fold electronic device is unfolded and is in the portrait state, and can better use a screen of the foldable-screen electronic device, thereby helping improve user experience.

With reference to the first aspect, in some implementations of the first aspect, after switching the display orientation of the first interface to the portrait orientation and displaying the first interface in the portrait layout manner in response to the rotation angle being greater than or equal to the first threshold, the method further includes: switching the display orientation of the first interface to the landscape orientation and displaying the first interface in the landscape layout manner in response to switching from the unfolded state to the folded state.

In this embodiment of this application, when the multi-fold electronic device is in the unfolded state and the portrait state, an interface may be displayed in the portrait layout manner. After the multi-fold electronic device switches from the unfolded state to the folded state again, the multi-fold electronic device switches from the portrait state to the landscape state. Therefore, the multi-fold electronic device automatically switches to display an interface in the landscape layout manner. This can better adapt to a display screen form obtained after the multi-fold electronic device is folded and is in the landscape state, thereby helping improve user experience.

With reference to the first aspect, in some implementations of the first aspect, switching the display orientation of the first interface to the landscape orientation and displaying the first interface in the landscape layout manner in response to switching from the folded state to the unfolded state includes: outputting first prompt information in response to switching from the folded state to the unfolded state, where the first prompt information is used to prompt a user to confirm whether to switch to the landscape layout manner; and switching the display orientation of the first interface to the landscape orientation and displaying the first interface in the landscape layout manner in response to an operation of confirming switching to the landscape layout manner by the user.

With reference to the first aspect, in some implementations of the first aspect, the first interface is an interface of a first application, and before switching to display the first interface in the landscape layout manner, the method further includes: determining that the first application is an application in an allowlist, where the allowlist is a list corresponding to an application allowed to automatically switch to the landscape layout manner.

With reference to the first aspect, in some implementations of the first aspect, switching the display orientation of the first interface to the landscape orientation and displaying the first interface in the landscape layout manner in response to switching from the folded state to the unfolded state includes: changing, in response to switching from the folded state to the unfolded state, orientation data detected by an orientation sensor; and switching the display orientation of the first interface to the landscape orientation and displaying the first interface in the landscape layout manner in response to a change in the orientation data detected by the orientation sensor.

With reference to the first aspect, in some implementations of the first aspect, the foldable-screen electronic device includes N folding hinges, N≥2 and is an integer, a foldable display screen of the foldable-screen electronic device is divided into N+1 sub-display screens by the N folding hinges, and switching the display orientation of the first interface to the landscape orientation and displaying the first interface in the landscape layout manner includes: switching the display orientation of the first interface to the landscape orientation, and displaying the first interface in the landscape layout manner on the N+1 sub-display screens; or switching the display orientation of the first interface to the landscape orientation, displaying the first interface in the landscape layout manner on M adjacent sub-display screens in the N+1 sub-display screens, and displaying a third interface on a remaining sub-display screen in the N+1 sub-display screens, where the third interface is an interface associated with the first interface, and M≥2 and is an integer.

In this embodiment of this application, when the multi-fold electronic device is in the folded state and the portrait state, an interface is displayed in the portrait layout manner. After switching from the folded state to the unfolded state, the multi-fold electronic device may automatically switch to display an interface in the landscape layout manner on some sub-display screens, and may display another interface on a remaining sub-display screen. This can better adapt to a display screen form obtained after the multi-fold electronic device is unfolded, can better use a screen of the foldable-screen electronic device, and reduce a user operation step, thereby helping improve user experience.

With reference to the first aspect, in some implementations of the first aspect, the first interface is a play interface of a first video, and the third interface is a comment interface of the first video; the first interface is a play interface of a first song, and the third interface is a comment interface of the first song; or the first interface is a main interface of a first commodity, and the third interface is an evaluation interface of the first commodity.

With reference to the first aspect, in some implementations of the first aspect, the display orientation of the second interface is the portrait orientation.

With reference to the first aspect, in some implementations of the first aspect, the method further includes: displaying a fourth interface in the landscape layout manner, where when the fourth interface is displayed in the landscape layout manner, the foldable-screen electronic device is in the folded state and the portrait state, and a display orientation of the fourth interface is the portrait orientation; and switching the display orientation of the fourth interface to the landscape orientation in response to switching from the folded state to the unfolded state.

In this embodiment of this application, when the foldable-screen electronic device is in the folded state and the portrait state, and runs an application that supports only the landscape layout manner, the user may unfold the foldable-screen electronic device. The foldable-screen electronic device may automatically rotate an interface of the application in response to switching from the folded state to the unfolded state, and the user does not need to manually rotate the device. This reduces a user operation, thereby helping improve user experience.

According to a second aspect, a foldable-screen electronic device is provided. The electronic device includes one or more processors and one or more memories. The one or more memories store one or more computer programs, the one or more computer programs include instructions, and when the instructions are executed by the one or more processors, any one of the foregoing aspect or the possible implementations of the foregoing aspect is performed.

According to a third aspect, a computer-readable storage medium is provided. The computer-readable storage medium includes a computer program or instructions, and when the computer program or the instructions are run on a computer, the method in any one of the first aspect and the possible implementations of the first aspect is performed.

According to a fourth aspect, a computer program product is provided. The computer program product includes a computer program or instructions, and when the computer program or the instructions are run on a computer, the method in any one of the first aspect and the possible implementations of the first aspect is performed.

According to a fifth aspect, a computer program is provided. When the computer program runs on a computer, the method in any one of the first aspect and the possible implementations of the first aspect is performed.

According to a sixth aspect, an embodiment of this application provides an electronic device. The electronic device includes modules/units for performing the method in any one of the foregoing aspect or the possible designs of the foregoing aspect. The modules/units may be implemented by hardware, or may be implemented by executing corresponding software by hardware.

According to a seventh aspect, an intelligent driving device is provided. The intelligent driving device includes the electronic device according to the fourth aspect.

For beneficial effects of the second aspect to the seventh aspect, refer to the beneficial effects of the first aspect. Details are not described.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of a single-fold electronic device according to an embodiment of this application;
FIG. 4 is a diagram of a multi-fold electronic device according to an embodiment of this application;
FIG. 5(a), FIG. 5(b), and FIG. 5(c) show a group of GUIs according to an embodiment of this application;
FIG. 6 shows a group of GUIs according to an embodiment of this application;
FIG. 7 shows a group of GUIs according to an embodiment of this application;
FIG. 8 shows a group of GUIs according to an embodiment of this application;
FIG. 9(a), FIG. 9(b), FIG. 9(c), and FIG. 9(d) show a group of GUIs according to an embodiment of this application;
FIG. 10 shows a group of GUIs according to an embodiment of this application;
FIG. 11 shows a group of GUIs according to an embodiment of this application;
FIG. 12(a), FIG. 12(b), and FIG. 12(c) show a group of GUIs according to an embodiment of this application;
FIG. 13 shows a group of GUIs according to an embodiment of this application;
FIG. 14 is a schematic flowchart of a display method according to an embodiment of this application;
FIG. 15 is a diagram of internal data flow according to an embodiment of this application; and
FIG. 16 is a diagram of a three-axis coordinate system according to an embodiment of this application.

### DESCRIPTION OF EMBODIMENTS

The following describes technical solutions in embodiments of this application with reference to accompanying drawings.

Terms used in the following embodiments are merely intended to describe specific embodiments, but are not intended to limit this application. The terms "one", "a", "the", and "this" of singular forms used in this specification and the appended claims of this application are also intended to include forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different locations in this specification do not necessarily mean referring to a same embodiment, but mean "one or more but not all of embodiments", unless otherwise specifically emphasized in another manner. The terms "include", "comprise", "have", and variants thereof all mean "include but are not limited to", unless otherwise specifically emphasized in another manner.

The following describes the electronic device and embodiments for using such an electronic device. In some embodiments, the electronic device may be a portable electronic device that further includes another function such as a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device equipped with iOS^{®}, Android^{®}, Microsoft^{®}, or another operating system. The portable electronic device may alternatively be another portable electronic device, for example, a laptop (Laptop). It should be further understood that in some other embodiments, the electronic device may not be the portable electronic device but a desktop computer. In some embodiments, the electronic device may be an apparatus in an intelligent driving device.

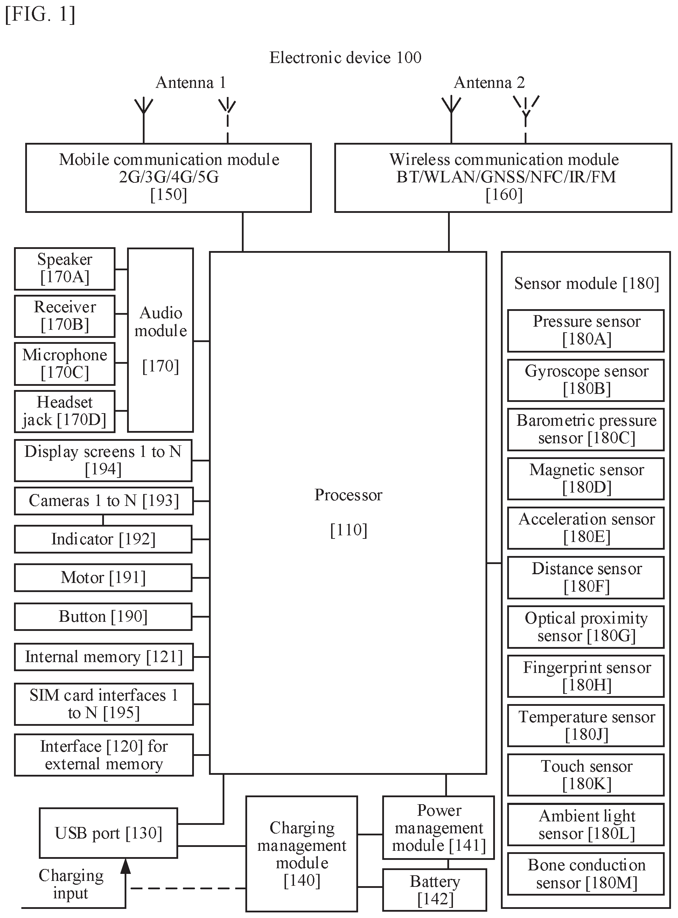

For example, FIG. 1 is a diagram of a structure of an electronic device 100. The electronic device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the instructions or the data may be directly invoked from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video on the display screen 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices into which at least one communication processing module is integrated. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diode, QLED), or the like. In some embodiments, the electronic device 100 may include one or N display screens 194, where N is a positive integer greater than 1.

The electronic device 100 may implement a photographing function through the ISP, the camera 193, the video codec, the GPU, the display screen 194, the application processor, and the like.

The internal memory 121 may be configured to store computer-executable program code. The executable program code includes instructions. The processor 110 runs the instructions stored in the internal memory 121, to perform various functional applications and data processing of the electronic device 100. The internal memory 121 may include a program storage region and a data storage region. The program storage region may store an operating system, an application required by at least one function (for example, a sound playing function or an image playing function), and the like. The data storage region may store data (for example, audio data and an address book) and the like created during use of the electronic device 100. In addition, the internal memory 121 may include a high-speed random access memory, and may further include a non-volatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be used to listen to music or answer a hands-free call through the speaker 170A.

The receiver 170B, also referred to as an "earpiece", is configured to convert an audio electrical signal into a sound signal. When a call is answered or voice information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may place the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, identify a sound source, implement a directional recording function, and the like.

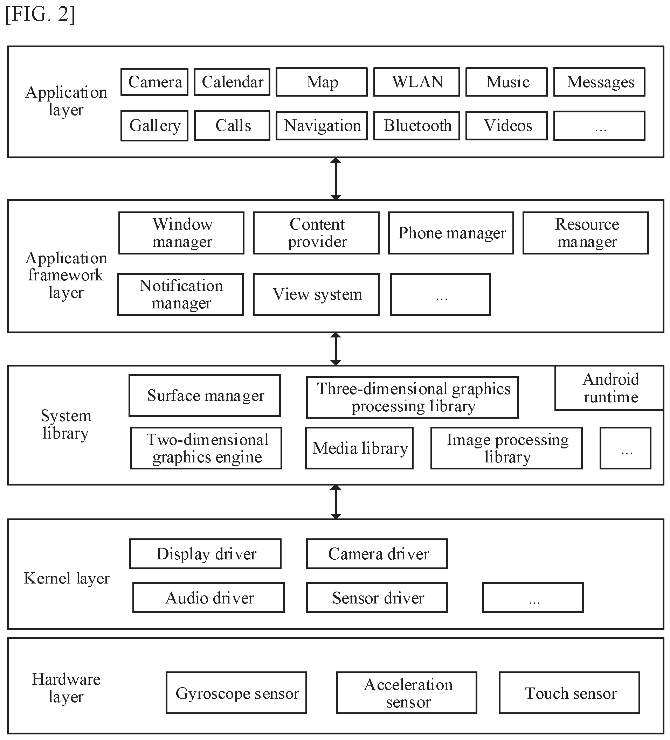

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application layer may include Camera, Settings, a third-party application, and the like. The third-party application may include Gallery, Calendar, Calls, Map, Navigation, WLAN, Bluetooth, Music, Videos, Messages, and the like.

The application framework layer provides an application programming interface (application programming interface, API) and a programming framework for applications at the application layer. The application framework layer may include some predefined functions.

As shown in FIG. 2, the application framework layer may include a window manager (window manager services, WMS), a content provider, a view system, a phone manager, a resource manager, a notification manager, a display manager (display manager services, DMS), and the like.

The window manager is configured to manage a window program. The window manager may obtain a size of a display screen, determine whether there is a status bar, lock a screen, take a screenshot, and the like. The window manager may further change a display orientation of a window, for example, implement a change from a portrait orientation to a landscape orientation. For descriptions of the landscape orientation and the portrait orientation, refer to the following descriptions. Details are not described herein.

The display manager is a module related to management of a display screen. For example, for a foldable-screen electronic device, the display manager may determine that the foldable-screen electronic device is in a folded state, a semi-unfolded state, or an unfolded state.

The content provider is configured to: store and obtain data, and enable the data to be accessed by an application. The data may include a video, an image, audio, calls that are made and answered, a browsing history and bookmarks, an address book, and the like.

The view system includes a visual control, for example, a control for displaying text or a control for displaying a picture, for example, displaying indication information for prompting a virtual shutter button in embodiments of this application. The view system may be configured to construct an application. A display interface may include one or more views. For example, a display interface including an SMS message notification icon may include a view for displaying text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file to an application.

The notification manager enables an application to display notification information in the status bar, may be configured to convey a notification message, and may automatically disappear after a short pause without requiring user interaction. For example, the notification manager is configured to: notify download completion, provide a message notification, and the like. The notification manager may alternatively be a notification that appears in the status bar at the top of the system in a form of a graph or scroll bar text, for example, a notification for an application running in background, or a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a function that needs to be called in a Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In addition, the system library may further include a status monitoring service module, for example, a physical status recognition module, configured to analyze and recognize a user gesture; and a sensor service module, configured to monitor sensor data uploaded by various sensors at a hardware layer, to determine a physical status of the electronic device 100.

The kernel layer is a layer between hardware and software. The kernel layer includes at least a display driver, a camera driver, an audio driver, and a sensor driver.

The hardware layer may include various types of sensors, for example, various types of sensors described in FIG. 1, and an acceleration sensor, a gyroscope sensor, a touch sensor, and the like in embodiments of this application.

It should be noted that in FIG. 2, only one manner of dividing a system framework is used as an example, and should not be understood as a specific limitation on embodiments of this application. In embodiments of this application, when the electronic device is equipped with different operating systems, there may be different frameworks for different operating systems. It may be understood that when different frameworks are used, manners of obtaining each layer of the framework through division, specific names, and specific layers at which each of the foregoing modules is located may be different.

When a user uses an electronic device, the electronic device may be in a landscape state or a portrait state. The landscape state is a corresponding state of the electronic device during display by the electronic device in a landscape mode. The portrait state is a corresponding state of the electronic device during display by the electronic device in a portrait mode. In the landscape state, a display screen of the electronic device is in a horizontal bar shape. In the portrait state, the display screen of the electronic device is in a vertical bar shape.

The electronic device includes the landscape state and the portrait state. Correspondingly, a display orientation of the electronic device includes a landscape orientation and a portrait orientation, that is, a display interface orientation of the electronic device includes the landscape orientation and the portrait orientation. A width of a display interface corresponding to the landscape orientation is greater than a height of the interface. In other words, when a width of an interface displayed by the electronic device is greater than a height, the display orientation of the electronic device may be referred to as the landscape orientation, that is, the display interface is in a horizontal bar shape. A width of a display interface of a screen corresponding to the portrait orientation is less than a height of the interface. In other words, when a width of an interface displayed by the electronic device is less than a height, the display orientation of the electronic device may be referred to as the portrait orientation, that is, the display interface is in a vertical bar shape.

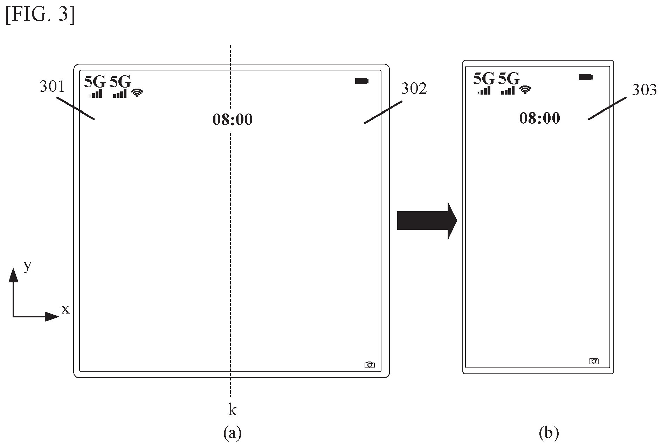

With advancements in screen technologies and folding hinge technologies, an increasing quantity of users start to use foldable-screen electronic devices. The foldable-screen electronic device provides a larger screen to the user. For the foldable-screen electronic device, in descending order of folding angles of the foldable-screen electronic device, a use form of the foldable-screen electronic device may include an unfolded state, a semi-unfolded state, and a folded state. For example, the unfolded state of the foldable-screen electronic device is shown in (a) in FIG. 3. The foldable-screen electronic device may include a display screen 301 and a display screen 302 after being unfolded. The display screen 301 and the display screen 302 may be different sub-display screens of a same display screen. It may be understood that when the foldable-screen electronic device is in the unfolded state, an included angle between the display screen 301 and the display screen 302 may be 180°.

As shown in (a) in FIG. 3, an axis k may be an axis when the foldable-screen electronic device is bent. The display screen 301 is located on a left side of the axis k, the display screen 302 is located on a right side of the axis, and a camera may be included on a back surface of the display screen 301 or the display screen 302.

As shown in (b) in FIG. 3, an external display screen 303 may be further included on a back side of the display screen 301. For the folded state of the foldable-screen electronic device shown in (b) in FIG. 3, when the foldable-screen electronic device is in the folded state, the included angle between the two display screens may be 0°, that is, the display screen 301 and the display screen 302 are opposite and attached to each other. This folding manner is inward folding.

In some other examples, back surfaces of the display screen 301 and the display screen 302 may be opposite and attached to each other. This folding manner is outward folding.

As shown in (a) and (b) in FIG. 3, the foldable-screen electronic device shown in the figure is folded in a single folding manner, that is, may be folded once. This foldable-screen electronic device may be referred to as a single-fold electronic device. When the single-fold electronic device is in the folded state, a length of the single-fold electronic device in a y direction is greater than a length in an x direction, that is, a height of the single-fold electronic device is greater than a width. When the single-fold electronic device is in the unfolded state, the length of the single-fold electronic device in the y direction is still greater than the length in the x direction, that is, the height of the single-fold electronic device is still greater than the width.

In some other examples, for the single-fold electronic device, when the single-fold electronic device is in the unfolded state, the length of the foldable-screen electronic device in the y direction may be less than or equal to the length in the x direction, that is, the height of the single-fold electronic device is less than or equal to the width.

In embodiments of this application, a state corresponding to the length of the foldable-screen electronic device in the y direction being greater than the length in the x direction is referred to as a portrait state, that is, a display screen of the foldable-screen electronic device is in a vertical bar shape, and a state corresponding to the length of the foldable-screen electronic device in the x direction being greater than the length in the y direction is referred to as a landscape state, that is, the display screen of the foldable-screen electronic device is in a horizontal bar shape.

In embodiments of this application, when the single-fold electronic device is in the folded state and the portrait state, if switching from the folded state to the unfolded state is performed, the single-fold electronic device may still be in the portrait state, as shown in (a) in FIG. 3, or may change from the portrait state to the landscape state.

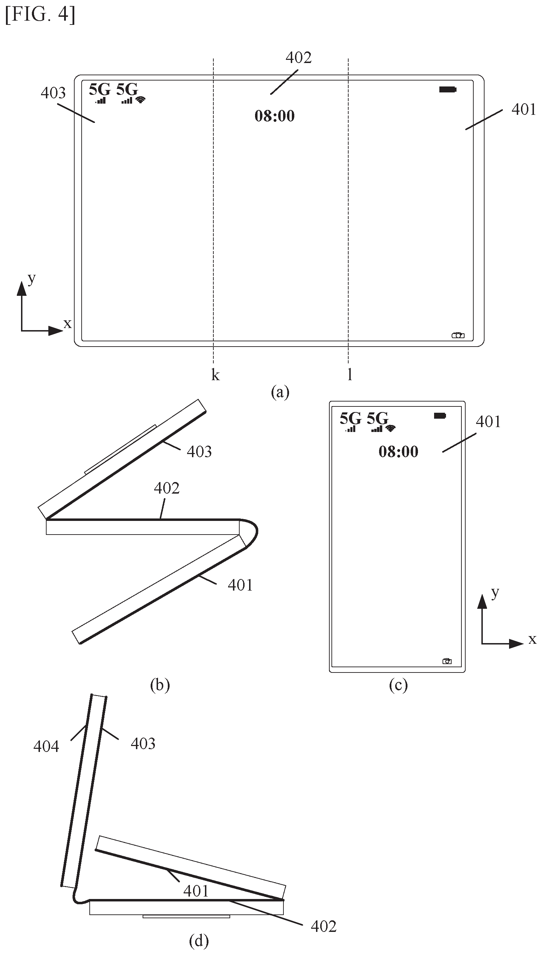

In addition to the single-fold electronic device, the foldable-screen electronic device may include a multi-fold electronic device, that is, may be folded a plurality of times. This foldable-screen electronic device may be referred to as a multi-fold electronic device. The multi-fold electronic device is also a future development direction of the foldable-screen electronic device. FIG. 4 is a diagram of a multi-fold electronic device according to an embodiment of this application.

An unfolded state of the multi-fold electronic device is shown in (a) in FIG. 4. The multi-fold electronic device may include a display screen 401, a display screen 402, and a display screen 403 after being unfolded. The display screen 401, the display screen 402, and the display screen 403 may be different sub-display screens of a same display screen. The display screen 401 and the display screen 402 are unfolded or folded through a folding hinge, and the display screen 402 and the display screen 403 are unfolded or folded through another folding hinge, that is, folding may be performed twice.

A folding manner of the multi-fold electronic device is shown in (b) in FIG. 4. A folding manner corresponding to the display screen 401 and the display screen 402 is outward folding, and a folding manner corresponding to the display screen 402 and the display screen 403 is inward folding.

According to embodiments of this application, the multi-fold electronic device may be folded twice, so that an aspect ratio of the foldable-screen device in the unfolded state can better adapt to a plurality of application scenarios. For example, the aspect ratio of the multi-fold electronic device after unfolding may be 16:9, 18:9, 21:9, or the like, to better adapt to a ratio of a mainstream video.

It may be learned from (a) and (c) in FIG. 4 that when the multi-fold electronic device is in a folded state, a length of the multi-fold electronic device in a y direction is greater than a length in an x direction, that is, a height of the multi-fold electronic device is greater than a width. When the multi-fold electronic device is in the unfolded state, the length of the multi-fold electronic device in the y direction is less than the length in the x direction, that is, the height of the multi-fold electronic device is less than the width. In other words, for the multi-fold electronic device, when the multi-fold electronic device changes from the folded state to the unfolded state, the multi-fold electronic device changes from a portrait state to a landscape state.

It should be noted that only one folding manner of the multi-fold electronic device is shown in (b) in FIG. 4, and should not be understood as a specific limitation on embodiments of this application. For example, in some other embodiments of this application, as shown in (d) in FIG. 4, the folding manner corresponding to the display screen 401 and the display screen 402 is inward folding, the folding manner corresponding to the display screen 402 and the display screen 403 is inward folding, and the display screen 403 covers the display screen 401 after folding. The multi-fold electronic device described in (d) in FIG. 4 may further include an external display screen 404 on a back side of the display screen 403, and a camera may be further included on a back side of the display screen 402.

It should be further noted that in FIG. 4, only an example in which the multi-fold electronic device includes two folding hinges is used for description. However, this is not specifically limited in this embodiment of this application. The multi-fold electronic device in this embodiment of this application may further include more folding hinges.

Although the foldable-screen electronic device provides a larger display area, there is a problem of poor adaptation in many application scenarios. In addition, to provide a larger display area for the user and ensure that the foldable-screen electronic device can be held by the user with a single hand after being folded, the foldable-screen electronic device gradually evolves into a multi-fold electronic device. This poses a greater challenge to adaptation to application scenarios (for example, video playing and navigation).

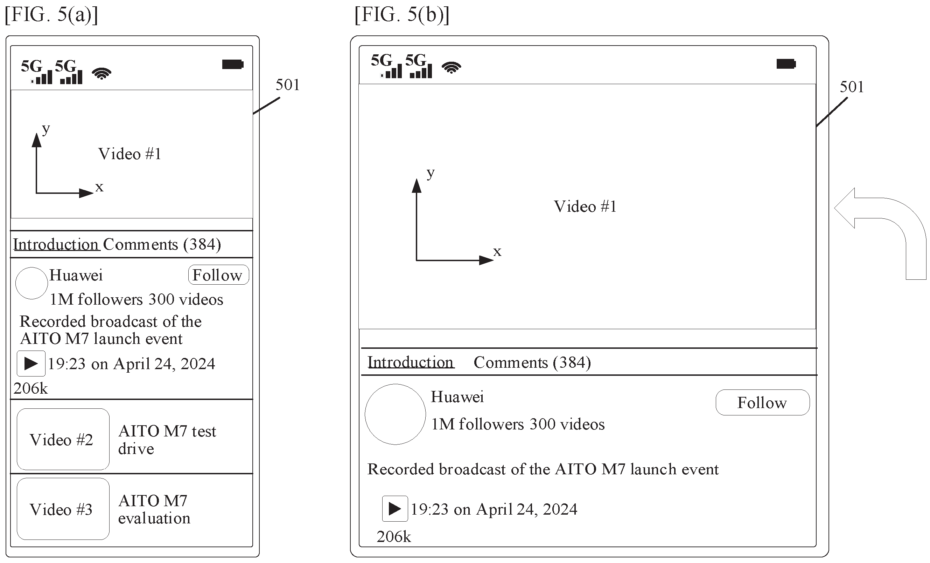

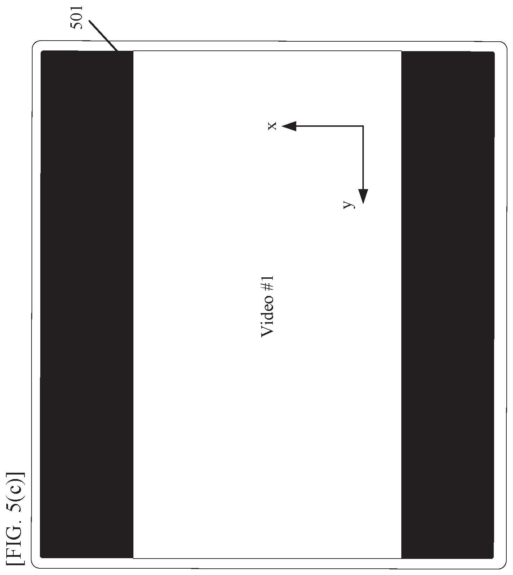

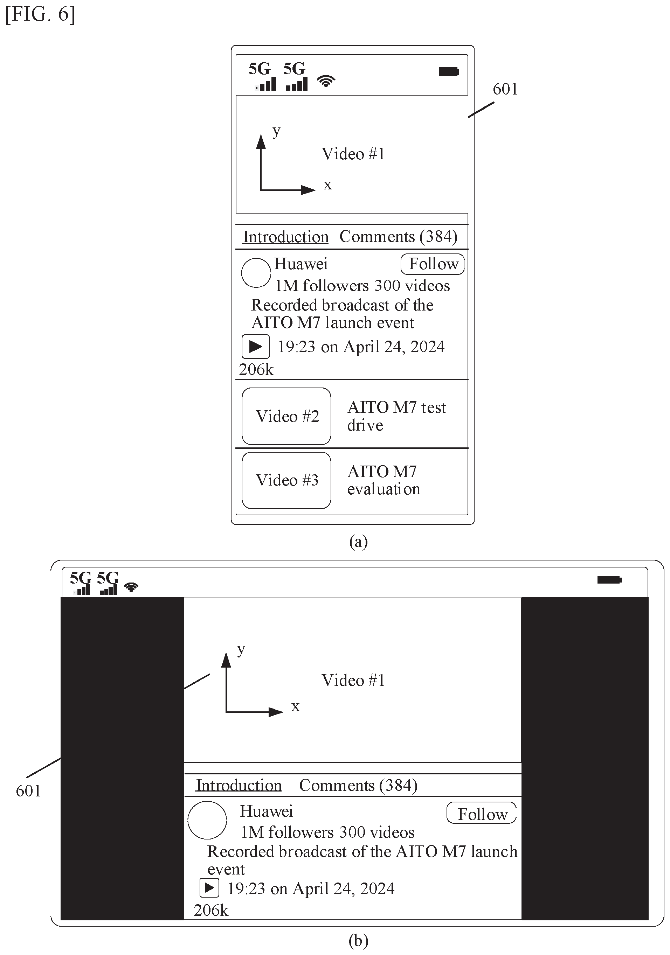

Currently, when a foldable-screen electronic device is folded, a user usually vertically holds the foldable-screen electronic device, that is, the foldable-screen electronic device is in both a folded state and a portrait state. In this case, the foldable-screen electronic device displays a current interface in a portrait layout manner. After the foldable-screen electronic device switches from the folded state to an unfolded state, the current interface is still displayed in the portrait layout manner. The following provides descriptions with reference to FIG. 5(a), FIG. 5(b), FIG. 5(c), and FIG. 6.

FIG. 5(a), FIG. 5(b), and FIG. 5(c) show a group of graphical user interfaces (graphical user interfaces, GUIs).

As shown in FIG. 5(a), when a single-fold electronic device is in both a folded state and a portrait state, an interface 501 may be displayed in a portrait layout manner. The interface 501 is an interface of a video application.

For example, when the single-fold electronic device is in both the folded state and the portrait state, the interface 501 may be displayed in the portrait layout manner on an external display screen. The external display screen is a non-foldable display screen. The single-fold electronic device further includes an internal display screen. The internal display screen is a foldable display screen. A folding manner corresponding to the single-fold electronic device is inward folding. For example, the single-fold electronic device is the foldable-screen electronic device shown in (b) in FIG. 3, and the single-fold electronic device may display the interface 501 on the display screen 303 (namely, the external display screen).

For example, when the single-fold electronic device is in both the folded state and the portrait state, the interface 501 may be displayed in the portrait layout manner on one sub-display screen of the foldable display screen.

The single-fold electronic device may play a video #1 in the interface 501, and display information about the video #1 and another video (for example, a video #2 and a video #3) associated with the video #1. A ratio of the video #1 may be 16:9. The information about the video #1 may be information such as a publisher of the video #1, a publishing time of the video #1, and a name of the video #1. Because the ratio of the video #1 is 16:9, to ensure that the ratio of the video #1 does not change, when the single-fold electronic device displays the interface 501 in the portrait layout manner, an area ratio of the video #1 in the interface 501 is less than area ratios of the information about the video #1 and the another video in the interface 501. When detecting an operation of unfolding the single-fold electronic device by a user, the single-fold electronic device may display a GUI shown in FIG. 5(b).

As shown in FIG. 5(b), in response to the operation of unfolding the single-fold electronic device by the user, the single-fold electronic device may adjust an interface element of the interface 501 based on an area of an unfolded display screen, for example, may enlarge a display area of the video #1, and no longer display the video #2 or the video #3.

It should be noted that the interface 501 in the GUI shown in FIG. 5(b) is still in the portrait layout manner, and only the display area of the video #1 and the information about the video #1 are enlarged.

As shown in FIG. 5(b) and FIG. 5(c), when detecting an operation of rotating leftward by the user, the single-fold electronic device may display, in response to the operation, a GUI shown in FIG. 5(c).

As shown in FIG. 5(c), in response to the operation of rotating leftward by the user, the single-fold electronic device may switch to display the interface 501 in a landscape layout manner. That the single-fold electronic device displays the interface 501 in the landscape layout manner may be understood as that the single-fold electronic device further enlarges the video #1 based on the ratio of the video #1, and no longer displays related information about the video #1. Because the ratio of the video #1 is 16:9, and the foldable-screen electronic device shown in FIG. 5(a), FIG. 5(b), and FIG. 5(c) is close to a square in an unfolded state, the single-fold electronic device fills a partial region of the display screen with a black edge, and enables the interface 501 to be located in a middle region of the display screen.

It may be learned from the foregoing descriptions that after switching from the folded state to the unfolded state, the single-fold electronic device still displays the interface 501 in the portrait layout manner, and switches from the portrait layout manner to the landscape layout manner only when detecting a rotation operation performed by the user.

In addition, because the single-fold electronic device shown in FIG. 5(a), FIG. 5(b), and FIG. 5(c) is close to a square in the unfolded state, if the single-fold electronic device is in the portrait state shown in FIG. 5(b), the interface 501 can be displayed in the landscape layout manner, and the display area of the video #1 is basically the same as a display area of the video #1 when the foldable-screen electronic device is in a landscape state shown in FIG. 5(c). It may be learned from analysis that the rotation operation performed by the user is essentially an operation that can be omitted.

The foldable-screen electronic device shown in FIG. 5(a), FIG. 5(b), and FIG. 5(c) is a single-fold electronic device. When the foldable-screen electronic device is a multi-fold electronic device, if the operation logic shown in FIG. 5(a), FIG. 5(b), and FIG. 5(c) is still used, advantages of the multi-fold electronic device may not be fully exploited. The following provides descriptions with reference to FIG. 6.

FIG. 6 shows another group of GUIs.

As shown in (a) in FIG. 6, when a multi-fold electronic device is in both a folded state and a portrait state, an interface 601 may be displayed in a portrait layout manner. The interface 601 is an interface of a video application. The multi-fold electronic device may be folded twice.

The multi-fold electronic device may play a video #1 in the interface 601, and display information about the video #1 and another video (for example, a video #2 and a video #3) associated with the video #1. A ratio of the video #1 may be 16:9. When detecting an operation of unfolding the foldable-screen electronic device by a user, the multi-fold electronic device may display a GUI shown in (b) in FIG. 6.

As shown in (b) in FIG. 6, in response to the operation of unfolding the multi-fold electronic device by the user, the multi-fold electronic device may adjust an interface element of the interface 601, for example, may enlarge a display area of the video #1, and no longer display the video #2 or the video #3.

It should be noted that the interface 601 in the GUI shown in (b) in FIG. 6 is still in the portrait layout manner, and only the display area of the video #1 and brief information about the video #1 are enlarged.

It should be further noted that to ensure a normal ratio of the video #1, when displaying the interface 601 in the portrait layout manner in an unfolded state, the multi-fold electronic device fills partial regions on two sides of a display screen with black edges.

It may be learned from the foregoing descriptions that after switching from the folded state to the unfolded state, the multi-fold foldable-screen electronic device still displays the interface 601 in the portrait layout manner. In addition, to ensure the ratio of the video #1, partial regions on the two sides of the display screen are filled with black edges, and the display screen is not fully used.

With reference to FIG. 5(a), FIG. 5(b), FIG. 5(c), and FIG. 6, it may be learned that regardless of the single-fold electronic device or the multi-fold electronic device, when switching from the folded state to the unfolded state is performed, an interface is still displayed in the portrait layout manner. This may not meet an operational psychological expectation of a user. For example, when the foldable-screen electronic device is in the folded state and the portrait state, a video may be played in the portrait layout manner. In this case, if the user unfolds the foldable-screen electronic device, the operational psychological expectation of the user may be that the video is played in full screen. However, the foldable-screen electronic device still plays the video in the portrait layout manner, and displays related information about the video in the interface. This does not meet the operational psychological expectation of the user, resulting in deterioration of user experience.

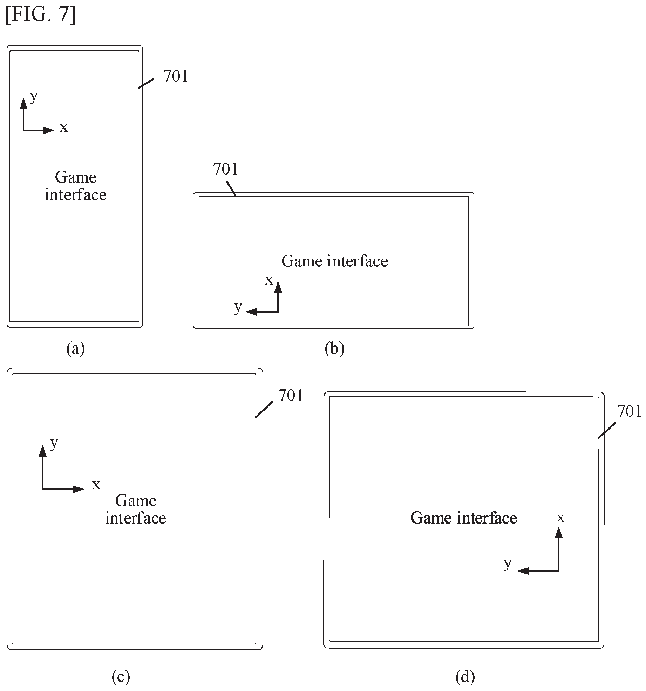

In addition, interfaces of some applications (for example, a game application) support only the landscape layout manner, that is, regardless of whether the foldable-screen electronic device is in the landscape state or the portrait state, an interface of the application is in the landscape layout manner. The following provides descriptions with reference to FIG. 7.

FIG. 7 shows another group of GUIs.

As shown in (a) in FIG. 7, when a single-fold electronic device is in both a folded state and a portrait state, an interface 701 is displayed in a landscape layout manner. The interface 701 is an interface of a game application. If a user wants to normally use the game application, the user needs to rotate the single-fold electronic device leftward by 90°, so that the single-fold electronic device switches from the portrait state to a landscape state, as shown in (b) in FIG. 7.

As shown in (a) and (c) in FIG. 7, in response to switching from the folded state to an unfolded state, the single-fold electronic device may enlarge the interface 701 based on an area of an unfolded display screen. However, if the user wants to normally use the game application, the user still needs to rotate the electronic device leftward by 90°, as shown in (d) in FIG. 7.

It may be understood that when the user rotates the single-fold electronic device leftward by 90°, a display orientation of the single-fold electronic device changes from a portrait orientation to a landscape orientation.

Similarly, when the multi-fold electronic device runs an application that supports only the landscape layout manner, there is also the problem shown in FIG. 7, that is, the user needs to manually rotate the device to normally use the application.

In conclusion, the foldable-screen electronic device has a problem of poor adaptation in many application scenarios, bringing some unnecessary operations to the user. In addition, to provide a larger display area for the user and ensure that the foldable-screen electronic device can be held by the user with a single hand after being folded, the foldable-screen electronic device gradually evolves into a multi-fold electronic device, that is, the foldable-screen electronic device may be folded a plurality of times. This poses a greater challenge to adaptation to application scenarios.

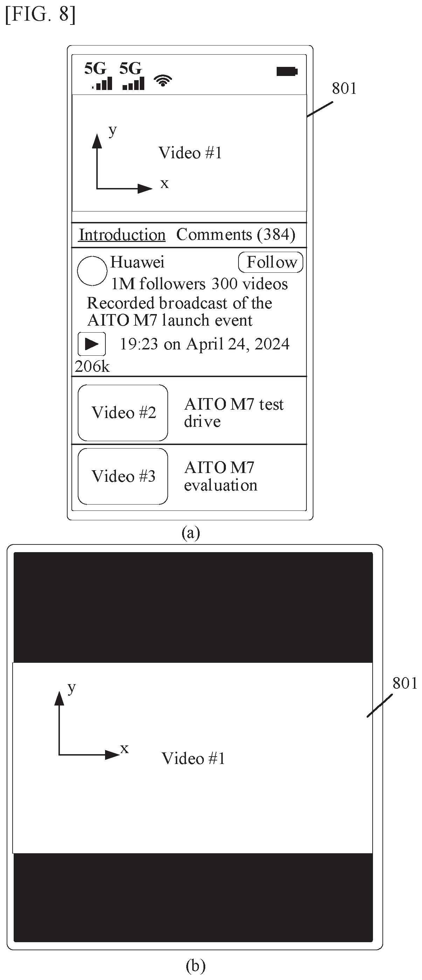

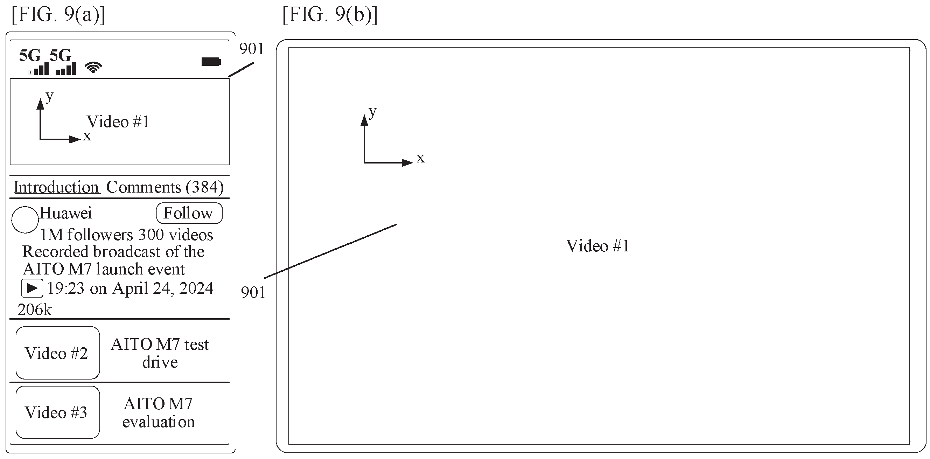

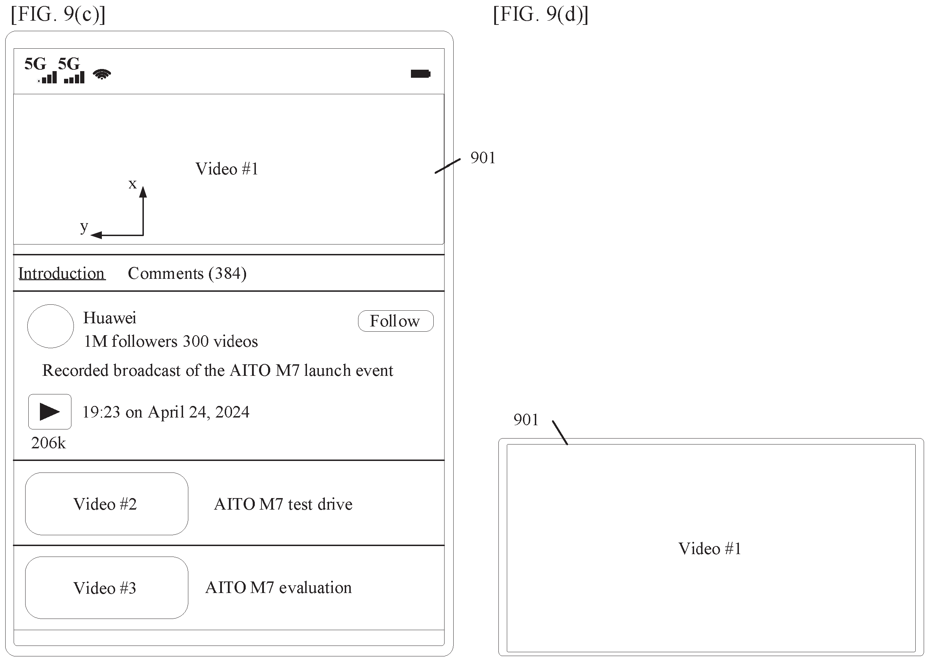

Based on this, embodiments of this application provide a display method. When a foldable-screen electronic device switches from a folded state to an unfolded state, an interface layout manner may be synchronously adjusted, and switching from a portrait layout manner to a landscape layout manner may be performed. The following provides detailed descriptions with reference to GUIs shown in FIG. 8, FIG. 9(a), FIG. 9(b), FIG. 9(c), and FIG. 9(d).

FIG. 8 shows a group of GUIs according to an embodiment of this application.

As shown in (a) in FIG. 8, when a single-fold electronic device is in both a folded state and a portrait state, an interface 801 is displayed in a portrait layout manner. The interface 801 is an interface of a video application. The single-fold electronic device may play a video #1 in the interface 801. A display orientation of the interface 801 shown in (a) in FIG. 8 is a portrait orientation.

When detecting an operation of unfolding the single-fold electronic device by a user, the single-fold electronic device may display a GUI shown in (b) in FIG. 8.

As shown in (b) in FIG. 8, in response to the operation of unfolding the single-fold electronic device by the user, the single-fold electronic device may switch the display orientation of the interface 801 to a landscape orientation and display the interface 801 in a landscape layout manner, that is, enlarge and play the video #1 based on a ratio of the video #1, and no longer display related information about the video #1.

It may be understood that if the single-fold electronic device switches from an unfolded state to the folded state again, switching may be synchronously performed to display the interface 801 in the portrait layout manner, and the display orientation of the interface 801 is switched from the landscape orientation to the portrait orientation.

It should be noted that because the ratio of the video #1 is 16:9, and the single-fold electronic device shown in FIG. 8 is close to a square in the unfolded state, when playing the video #1, the single-fold electronic device fills a partial region of a display screen with a black edge, and enables the interface 801 to be located in a middle region of the display screen.

In this embodiment of this application, when the single-fold electronic device is in the folded state and the portrait state, an interface is displayed in the portrait layout manner. After switching from the folded state to the unfolded state, the single-fold electronic device may automatically switch to the landscape layout manner to display an interface, and the user does not need to rotate the device. This can better use a screen of the foldable-screen electronic device, and reduce a user operation step, thereby helping improve user experience.

FIG. 9(a), FIG. 9(b), FIG. 9(c), and FIG. 9(d) show a group of GUIs according to an embodiment of this application.

As shown in FIG. 9(a), when a multi-fold electronic device is in both a folded state and a portrait state, an interface 901 is displayed in a portrait layout manner. The interface 901 is an interface of a video application. The multi-fold electronic device may play a video #1 in the interface 901. A display orientation of the interface 901 shown in FIG. 9(a) is a portrait orientation.

When detecting an operation of unfolding the foldable-screen electronic device by a user, the multi-fold electronic device may display a GUI shown in FIG. 9(b).

As shown in FIG. 9(b), in response to the operation of unfolding the foldable-screen electronic device by the user, the multi-fold electronic device may switch the display orientation of the interface 901 to a landscape orientation and display the interface 901 in a landscape layout manner, that is, play the video #1 in full screen.

It should be noted that because a ratio of the video #1 is 16:9, a ratio of the multi-fold electronic device shown in FIG. 9(a), FIG. 9(b), FIG. 9(c), and FIG. 9(d) in an unfolded state may be 16:9 or close to 16:9 (for example, 18:9 or 18.5:9). Therefore, the multi-fold electronic device may play the video #1 in full screen. This improves utilization of a display screen, and makes switching logic better meet a psychological expectation of the user, thereby helping improve user experience.

It may be understood that if the multi-fold electronic device switches from the unfolded state to the folded state again, switching may be synchronously performed to display the interface 901 in the portrait layout manner, and the display orientation of the interface 901 is switched from the landscape orientation to the portrait orientation.

In this embodiment of this application, when the multi-fold electronic device is in the folded state and the portrait state, an interface is displayed in the portrait layout manner. After switching from the folded state to the unfolded state, the multi-fold electronic device may automatically switch to the landscape layout manner to display an interface. This can better adapt to a display screen form obtained after the multi-fold electronic device is unfolded, can better use a screen of the foldable-screen electronic device, and reduce a user operation step, thereby helping improve user experience.

As shown in FIG. 9(b) and FIG. 9(c), the multi-fold electronic device detects an operation of rotating the electronic device leftward by 90° by the user, and in response to the operation, may switch the display orientation of the interface 901 to the portrait orientation and display the interface 901 in the portrait layout manner.

In this embodiment of this application, when the multi-fold electronic device is in the unfolded state, an interface may be displayed in the landscape layout manner. After the multi-fold electronic device rotates, the multi-fold electronic device switches from a landscape state to the portrait state. Therefore, the multi-fold electronic device automatically switches to display an interface in the portrait layout manner. This can better adapt to a display screen form obtained after the multi-fold electronic device is unfolded and is in the portrait state, and can better use a screen of the foldable-screen electronic device, thereby helping improve user experience.

It may be learned from comparison between FIG. 9(a) and FIG. 9(c) that although the interface 901 is displayed in the portrait layout manner, the multi-fold electronic device in FIG. 9(c) is in the unfolded state and has a larger display area. Therefore, each interface element of the interface 901 can be enlarged.

As shown in FIG. 9(c) and FIG. 9(d), the multi-fold electronic device detects a folding operation performed by the user, and in response to the operation, may switch the display orientation of the interface 901 to the landscape orientation and display the interface 901 in the landscape layout manner.

In this embodiment of this application, when the multi-fold electronic device is in the unfolded state and the portrait state, an interface may be displayed in the portrait layout manner. After the multi-fold electronic device switches from the unfolded state to the folded state again, the multi-fold electronic device switches from the portrait state to the landscape state. Therefore, the multi-fold electronic device automatically switches to display an interface in the landscape layout manner. This can better adapt to a display screen form obtained after the multi-fold electronic device is folded and is in the landscape state, thereby helping improve user experience.

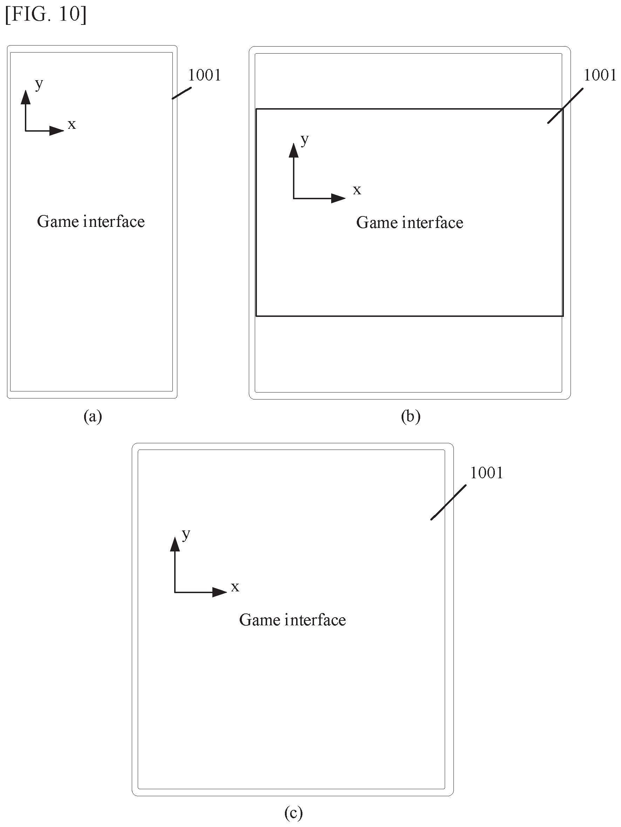

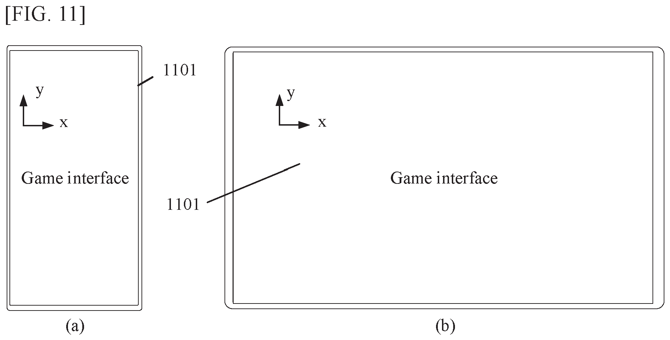

In the GUIs shown in FIG. 8, FIG. 9(a), FIG. 9(b), FIG. 9(c), and FIG. 9(d), an example in which an application supports both the landscape layout manner and the portrait layout manner is used. In some other embodiments of this application, some applications may support only the landscape layout manner. For the some applications, the foldable-screen electronic device may adjust interfaces of the some applications based on a status of the foldable-screen electronic device. The following provides detailed descriptions with reference to FIG. 10 and FIG. 11.

FIG. 10 shows another group of GUIs according to an embodiment of this application.

As shown in (a) in FIG. 10, when a single-fold electronic device is in both a folded state and a portrait state, an interface 1001 is displayed in a landscape layout manner. The interface 1001 is an interface of a game application.

As shown in (a) and (b) in FIG. 10, in response to switching from the folded state to an unfolded state, the single-fold electronic device may switch a display orientation of the interface 1001 to a landscape orientation, and may further adjust a size of the interface 1001 based on an area of an unfolded display screen.

In this embodiment of this application, when the single-fold electronic device is in the folded state and the portrait state, and runs an application that supports only the landscape layout manner, a user may unfold the single-fold electronic device. The single-fold electronic device may automatically rotate an interface of the application in response to switching from the folded state to the unfolded state, and the user does not need to manually rotate the device. This reduces a user operation, thereby helping improve user experience.

In some other implementations of this application, as shown in (a) and (c) in FIG. 10, in response to switching from the folded state to an unfolded state, the single-fold electronic device may rotate the interface 1001 leftward by 90°, and adjust a size of the interface 1001 based on an area of an unfolded display screen, to display the interface 1001 in full screen. It may be understood that a display orientation of the interface 1001 shown in (c) in FIG. 10 is still a portrait orientation.

FIG. 11 shows another group of GUIs according to an embodiment of this application.

As shown in (a) in FIG. 11, when a multi-fold electronic device is in both a folded state and a portrait state, an interface 1101 is displayed in a landscape layout manner. The interface 1101 is an interface of a game application.

As shown in (a) and (b) in FIG. 11, in response to switching from the folded state to an unfolded state, the multi-fold electronic device may switch a display orientation of the interface 1101 to a landscape orientation, and adjust a size of the interface 1101 based on an area of an unfolded display screen, to display the interface 1101 in full screen.

In this embodiment of this application, when the multi-fold electronic device is in the folded state and the portrait state, and runs an application that supports only the landscape layout manner, a user may unfold the multi-fold electronic device. The multi-fold electronic device may automatically rotate an interface of the application in response to switching from the folded state to the unfolded state, and the user does not need to manually rotate the device. This reduces a user operation, thereby helping improve user experience.

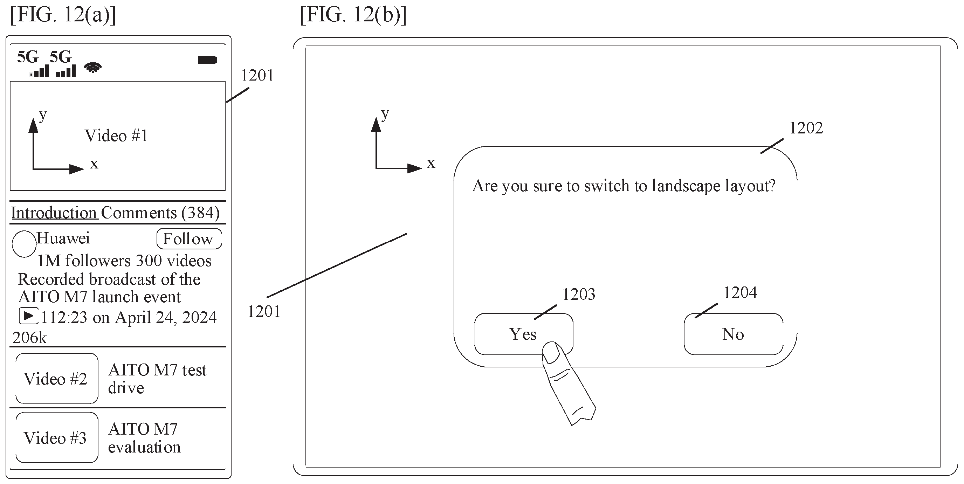

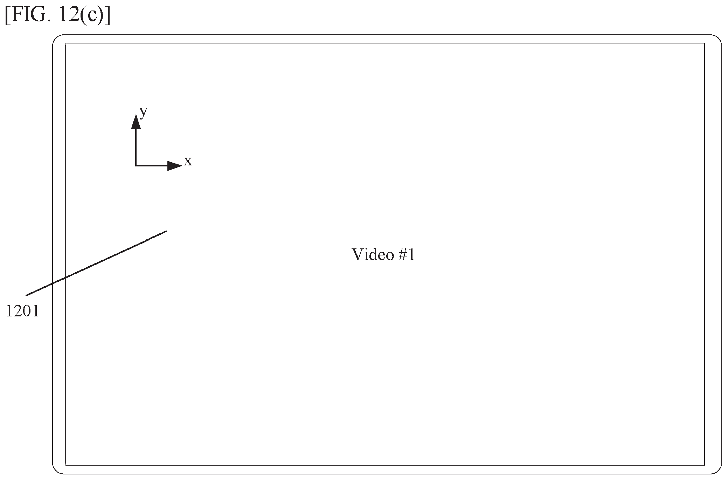

In the foregoing descriptions of FIG. 8, FIG. 9(a), FIG. 9(b), FIG. 9(c), and FIG. 9(d), when the foldable-screen electronic device is in the folded state and the portrait state, an interface may be displayed in the portrait layout manner, and in response to switching from the folded state to the unfolded state, switching may be automatically performed to display an interface in the landscape layout manner. In some other embodiments in embodiments of this application, when switching to the landscape layout manner to display an interface, the foldable-screen electronic device may first output prompt information, and after detecting a user confirmation operation, switch to the landscape layout manner to display an interface. The following provides detailed descriptions with reference to FIG. 12(a), FIG. 12(b), and FIG. 12(c).

FIG. 12(a), FIG. 12(b), and FIG. 12(c) show another group of GUIs according to an embodiment of this application.

As shown in FIG. 12(a), when a multi-fold electronic device is in both a folded state and a portrait state, an interface 1201 is displayed in a portrait layout manner. The interface 1201 is an interface of a video application. The multi-fold electronic device may play a video #1 in the interface 1201.

When detecting an operation of unfolding the multi-fold electronic device by a user, the multi-fold electronic device may display a GUI shown in FIG. 12(b).

As shown in FIG. 12(b), in response to switching from the folded state to an unfolded state, the multi-fold electronic device may display prompt information 1202. The prompt information is used to prompt the user to confirm whether to switch from the portrait layout manner to a landscape layout manner.

As shown in FIG. 12(b) and FIG. 12(c), in response to an operation of tapping a control 1203 by the user, the multi-fold electronic device may switch to display the interface 1201 in the landscape layout manner.

It may be understood that if the user taps a control 1204, in response to the operation performed by the user, the multi-fold electronic device may keep displaying the interface 1201 in the portrait layout manner, that is, similar to the GUI shown in (b) in FIG. 6.

In this embodiment of this application, when the multi-fold electronic device is in the folded state and the portrait state, an interface is displayed in the portrait layout manner. After switching from the folded state to the unfolded state, the multi-fold electronic device may first ask the user whether to switch to the landscape layout manner, and when detecting an operation of confirming switching to the landscape layout manner by the user, may switch to the landscape layout manner to display an interface. This can better adapt to a display screen form obtained after the multi-fold electronic device is unfolded, can better use a screen obtained after the foldable-screen electronic device is unfolded, reduce a user operation step, and result in no false triggering, thereby helping improve user experience.

In this embodiment of this application, before switching from the portrait layout manner to the landscape layout manner, the foldable-screen electronic device may first ask the user whether to switch to the landscape layout manner, to determine whether to finally switch to the landscape layout manner. In addition, in some other embodiments of this application, an allowlist is further configured for the foldable-screen electronic device. The allowlist includes one or more applications. The allowlist may be preset (for example, preset by the user, or preset when the foldable-screen electronic device is delivered from a factory). It is assumed that an application is an application in the allowlist. When the foldable-screen electronic device is in the folded state and the portrait state, an interface of the application is displayed in the portrait layout manner. After switching from the folded state to the unfolded state, the foldable-screen electronic device may automatically switch from the portrait layout manner to the landscape layout manner, and when the foldable-screen electronic device is in the unfolded state, the interface of the application is displayed in the landscape layout manner. When the foldable-screen electronic device switches from the unfolded state to the folded state and the foldable-screen electronic device is in the portrait state, the interface of the application is displayed in the portrait layout manner. It is assumed that an application is not an application in the allowlist. When the foldable-screen electronic device is in the folded state and the portrait state, an interface of the application is displayed in the portrait layout manner. After switching from the folded state to the unfolded state, the foldable-screen electronic device may keep displaying the interface in the portrait manner, or output prompt information to prompt the user whether to switch to the landscape layout manner.

In some other embodiments of this application, an application attribute is configured for an application. The application attribute may indicate that when the foldable-screen electronic device is in the folded state and the portrait state, an interface of the application is displayed in the portrait layout manner, and after the foldable-screen electronic device switches from the folded state to the unfolded state, automatic switching from the portrait layout manner to the landscape layout manner is allowed, and may further indicate that when the foldable-screen electronic device is in the unfolded state, the interface of the application is displayed in the landscape layout manner, and when the foldable-screen electronic device switches from the unfolded state to the folded state and the foldable-screen electronic device is in the portrait state, the interface of the application is displayed in the portrait layout manner.

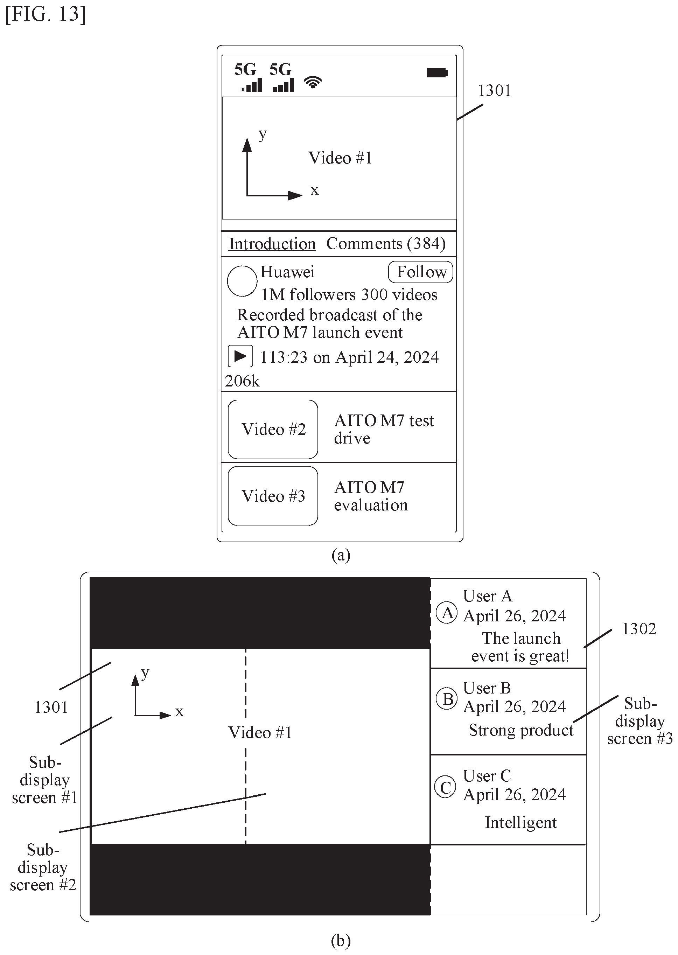

In this embodiment of this application, when the foldable-screen electronic device is a multi-fold electronic device, and the multi-fold electronic device is in the unfolded state, the foldable display screen may be divided into at least three sub-display screens. When displaying an interface in the landscape layout manner, the multi-fold electronic device may display the interface in the landscape layout manner on some sub-display screens (a quantity is greater than or equal to 2), and display another interface on a remaining sub-display screen. The following provides descriptions with reference to FIG. 13.

FIG. 13 shows a group of GUIs according to an embodiment of this application.

As shown in (a) in FIG. 13, when a multi-fold electronic device is in both a folded state and a portrait state, an interface 1301 is displayed in a portrait layout manner. The interface 1301 is an interface of a video application. The multi-fold electronic device may play a video #1 in the interface 1301.

When detecting an operation of unfolding the foldable-screen electronic device by a user, the multi-fold electronic device may display a GUI shown in (b) in FIG. 13.

As shown in (b) in FIG. 13, the multi-fold electronic device includes a sub-display screen #1, a sub-display screen #2, and a sub-display screen #3 after being unfolded. In response to the operation of unfolding the foldable-screen electronic device by the user, the multi-fold electronic device may switch a display orientation of the interface 1301 to a landscape orientation, display the interface 1301 in a landscape layout manner on the sub-display screen #1 and the sub-display screen #2, and display an interface 1302 on the sub-display screen #3. The interface 1302 is also an interface of the video application. For example, the interface 1302 may be a comment interface of the video #1. A display orientation of the interface 1302 may be a portrait orientation.

In this embodiment of this application, when the multi-fold electronic device is in the folded state and the portrait state, an interface is displayed in the portrait layout manner. After switching from the folded state to the unfolded state, the multi-fold electronic device may automatically switch to display an interface in the landscape layout manner on some sub-display screens, and may display another interface on a remaining sub-display screen. This can better adapt to a display screen form obtained after the multi-fold electronic device is unfolded, can better use a screen of the foldable-screen electronic device, and reduce a user operation step, thereby helping improve user experience.

It should be noted that in FIG. 13, only an example in which the interface 1301 is a play interface of the video #1, and the interface 1302 is a comment interface of the video #1 is used. However, this is not specifically limited in this embodiment of this application. For example, the interface 1301 may be a play interface of a song, and the interface 1302 may be a comment interface of the song.

For another example, the interface 1301 may be a main interface of a commodity, and the interface 1302 may be an evaluation interface of the commodity.

The foregoing describes, with reference to the GUI, the display method provided in embodiments of this application. The following describes, with reference to a schematic flowchart of a method, the display method provided in embodiments of this application.

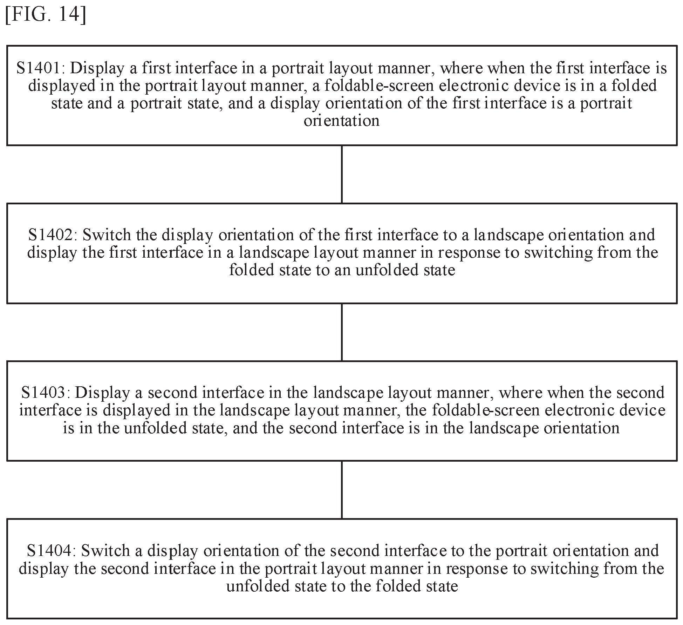

FIG. 14 is a schematic flowchart of a display method according to an embodiment of this application. The method is applied to a foldable-screen electronic device. As shown in FIG. 14, the method includes the following steps.

S1401: Display a first interface in a portrait layout manner, where when the first interface is displayed in the portrait layout manner, the foldable-screen electronic device is in a folded state and a portrait state, and a display orientation of the first interface is a portrait orientation.

When the foldable-screen electronic device is in the folded state and the portrait state, the first interface may be displayed in the portrait layout manner. The first interface is an interface of a first application, and the first application further supports a landscape layout manner.

In some embodiments, the foldable-screen electronic device is a single-fold electronic device.

For example, as shown in (a) in FIG. 8, the single-fold electronic device displays the interface 801 in the portrait layout manner.

In some embodiments, the foldable-screen electronic device is a multi-fold electronic device.

For example, as shown in FIG. 9(a), the multi-fold electronic device displays the interface 901 in the portrait layout manner.

S1402: Switch the display orientation of the first interface to a landscape orientation and display the first interface in the landscape layout manner in response to switching from the folded state to an unfolded state.

For example, as shown in (a) and (b) in FIG. 8, when switching from the folded state to the unfolded state, the single-fold electronic device may switch a display orientation of the interface 801 to the landscape orientation and display the interface 801 in the landscape layout manner.

For another example, as shown in FIG. 9(a) and FIG. 9(b), when switching from the folded state to the unfolded state, the multi-fold electronic device may switch a display orientation of the interface 901 to the landscape orientation and display the interface 901 in the landscape layout manner.

In this embodiment of this application, when the foldable-screen electronic device is in the folded state and the portrait state, a current interface is displayed in the portrait layout manner. After switching from the folded state to the unfolded state, the foldable-screen electronic device may automatically switch to display the current interface in the landscape layout manner. This can better adapt to a display screen form obtained after the foldable-screen electronic device is unfolded, can better use a screen of the foldable-screen electronic device, and reduce a user operation step. Therefore, a user does not need to manually rotate the device, thereby helping improve user experience.

In this embodiment of this application, an implementation in which the foldable-screen electronic device switches from displaying the first interface in the portrait layout manner to displaying the first interface in the landscape layout manner is not specifically limited. The following describes several possible implementations by using examples.

In a possible implementation, when detecting switching from the folded state to the unfolded state, the foldable-screen electronic device may invoke a system interface to change a window orientation of an activity corresponding to the first interface, that is, implement a change from the portrait orientation to the landscape orientation, and then load a display resource corresponding to the landscape layout manner of the first interface. It may be understood that the display orientation of the first interface is switched from the portrait orientation to the landscape orientation, and the foldable-screen electronic device may correspondingly adjust a size of the first interface based on a size of an unfolded display screen, and then display the first interface in the landscape layout manner.

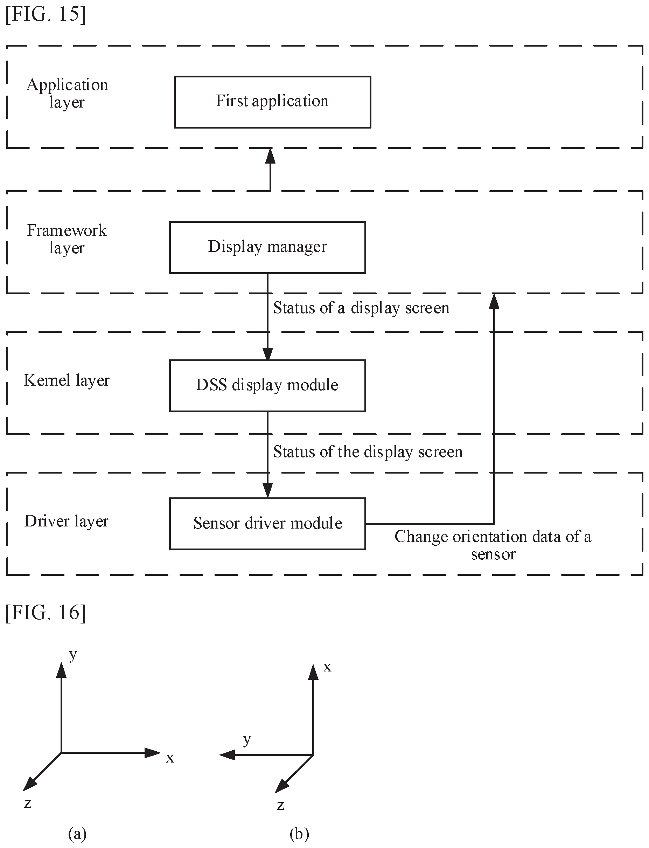

In a possible implementation, when detecting switching from the folded state to the unfolded state, the foldable-screen electronic device may change an orientation detected by an orientation sensor, and then determine, based on the changed orientation from the orientation sensor, to switch from the portrait layout manner to the landscape layout manner. FIG. 15 is a diagram of internal data flow.

As shown in FIG. 15, a display manager may obtain a folding angle of a folding hinge of the foldable-screen electronic device, to determine a status of the foldable-screen electronic device and a change in the status based on the folding angle of the folding hinge. The status of the foldable-screen electronic device includes the folded state, a semi-unfolded state, and the unfolded state.

For example, the foldable-screen electronic device is a multi-fold electronic device, and the multi-fold electronic device includes two folding hinges. If the display manager determines that angles of both the two folding hinges are 180°, it may be determined that the multi-fold electronic device is in the unfolded state.

For another example, the foldable-screen electronic device is a multi-fold electronic device, and the multi-fold electronic device includes two folding hinges. If the display manager determines that angles of both the two folding hinges change from 0° to 180°, it may be determined that the multi-fold electronic device switches from the folded state to the unfolded state.

When determining that the status of the foldable-screen electronic device changes, the display manager may send current status information of the foldable-screen electronic device to a sensor driver module. After receiving the status information from the foldable-screen electronic device, the sensor driver module may change orientation data detected by the orientation sensor, to adapt to a current status of the foldable-screen electronic device.

In some embodiments, the display manager may deliver the current status information of the foldable-screen electronic device through broadcasting by using a display module at a kernel layer.

For example, when the foldable-screen electronic device is in the folded state and the portrait state, a three-axis coordinate system corresponding to the orientation sensor is shown in (a) in FIG. 16, where a z axis is perpendicular to the display screen and points outward. When the foldable-screen electronic device switches from the folded state to the unfolded state, the display manager may send, to the sensor driver module, information indicating that the foldable-screen electronic device is currently in the unfolded state. After receiving the information, the sensor driver module may reorient the three-axis coordinate system corresponding to the orientation sensor, to adapt to the unfolded state. The reoriented three-axis coordinate system is shown in (b) in FIG. 16.

It may be understood that in the examples shown in (a) and (b) in FIG. 16, when the foldable-screen electronic device switches from the folded state to the unfolded state, the user does not manually rotate the foldable-screen electronic device, and the orientation data detected by the orientation sensor should remain unchanged. However, in this embodiment of this application, because the orientation data detected by the orientation sensor is changed by using the sensor driver module, changed orientation data can be the same as orientation data detected by the orientation sensor when the foldable-screen electronic device actually rotates. In other words, changing, by using the sensor driver module, the orientation data detected by the orientation sensor may be understood as simulating rotation of the foldable-screen electronic device by the user.

After changing the orientation data detected by the orientation sensor, the sensor driver module may send the changed orientation data to the first application. The first application is an application corresponding to the first interface. After receiving the orientation data, the first application may load the display resource corresponding to the landscape layout manner of the first interface.

In some embodiments, the sensor driver module may report the changed orientation data to the first application by using a framework layer.

When the foldable-screen electronic device switches from the folded state to the unfolded state, the three-axis coordinate system is switched from the state shown in (a) in FIG. 16 to the state shown in (b) in FIG. 16. It may be understood that in this case, if the foldable-screen electronic device switches from the unfolded state to the folded state again, the three-axis coordinate system may be switched from the state shown in (b) in FIG. 16 to the state shown in (a) in FIG. 16.

S1403: Display a second interface in the landscape layout manner, where when the second interface is displayed in the landscape layout manner, the foldable-screen electronic device is in the unfolded state, and the second interface is in the landscape orientation.

S1404: Switch a display orientation of the second interface to the portrait orientation and display the second interface in the portrait layout manner in response to switching from the unfolded state to the folded state.

After the foldable-screen electronic device switches from the unfolded state to the folded state, the foldable-screen electronic device is in the portrait state.

For example, as shown in (a) and (b) in FIG. 8, when switching from the unfolded state to the folded state, the single-fold electronic device may switch the display orientation of the interface 801 to the portrait orientation and display the interface 801 in the portrait layout manner.

For another example, as shown in FIG. 9(a) and FIG. 9(b), when switching from the unfolded state to the folded state, the multi-fold electronic device may switch the display orientation of the interface 901 to the portrait orientation and display the interface 901 in the portrait layout manner.

**In** this embodiment of this application, when the foldable-screen electronic device is in the unfolded state, a current interface is displayed in the landscape layout manner. After switching from the unfolded state to the portrait state, the foldable-screen electronic device may automatically switch to display the current interface in the portrait layout manner. This can better adapt to a display screen form obtained after the foldable-screen electronic device is folded.

**In** some embodiments, after switching the display orientation of the first interface to the landscape orientation and displaying the first interface in the landscape layout manner in response to switching from the folded state to the unfolded state, the method further includes:
switching the display orientation of the first interface to the portrait orientation and displaying the first interface in the portrait layout manner in response to a rotation angle being greater than or equal to a first threshold.

**In** some embodiments, before switching the display orientation of the first interface to the portrait orientation and displaying the first interface in the portrait layout manner, the method further includes:
determining that the foldable-screen electronic device is a multi-fold electronic device.

After the multi-fold electronic device is unfolded from the folded state and the portrait state, the multi-fold electronic device switches from the portrait state to a landscape state. In this case, when the multi-fold electronic device detects that the rotation angle is greater than or equal to the first threshold, and the multi-fold electronic device switches from the landscape state to the portrait state again, the display orientation of the first interface may be switched to the portrait orientation and the first interface may be displayed in the portrait layout manner.

For example, as shown in FIG. 9(b) and FIG. 9(c), the multi-fold electronic device detects an operation of rotating the electronic device leftward by 90° by the user, and in response to the operation, may switch the display orientation of the interface 901 to the portrait orientation and display the interface 901 in the portrait layout manner.

In some embodiments, after switching the display orientation of the first interface to the portrait orientation and displaying the first interface in the portrait layout manner in response to the rotation angle being greater than or equal to the first threshold, the method further includes:
switching the display orientation of the first interface to the landscape orientation and displaying the first interface in the landscape layout manner in response to switching from the unfolded state to the folded state.

After the multi-fold electronic device is folded from the unfolded state and the portrait state, the multi-fold electronic device switches from the portrait state to the landscape state. In this case, the display orientation of the first interface may be switched to the landscape orientation and the first interface may be displayed in the landscape layout manner.

As shown in FIG. 9(c) and FIG. 9(d), the multi-fold electronic device detects a folding operation performed by the user, and in response to the operation, may switch the display orientation of the interface 901 to the landscape orientation and display the interface 901 in the landscape layout manner.

In some embodiments, switching the display orientation of the first interface to the landscape orientation and displaying the first interface in the landscape layout manner in response to switching from the folded state to the unfolded state includes:
outputting first prompt information in response to switching from the folded state to the unfolded state, where the first prompt information is used to prompt a user to confirm whether to switch to the landscape layout manner; and
switching the display orientation of the first interface to the landscape orientation and displaying the first interface in the landscape layout manner in response to an operation of confirming switching to the landscape layout manner by the user.

For example, as shown in FIG. 12(a), FIG. 12(b), and FIG. 12(c), in response to switching from the folded state to the unfolded state, the multi-fold electronic device may display prompt information 1202. The prompt information is used to prompt the user to confirm whether to switch from the portrait layout manner to the landscape layout manner. In response to an operation of tapping a control 1203 by the user, the multi-fold electronic device may switch to display the interface 1201 in the landscape layout manner.

In some embodiments, the first interface is an interface of the first application, and before switching the display orientation of the first interface to the landscape orientation and displaying the first interface in the landscape layout manner, the method further includes:
determining that the first application is an application in an allowlist, where the allowlist is a list corresponding to an application allowed to automatically switch to the landscape layout manner.

In some embodiments, the foldable-screen electronic device includes N folding hinges, N≥2 and is an integer, a foldable display screen of the foldable-screen electronic device is divided into N+1 sub-display screens by the N folding hinges, and switching the display orientation of the first interface to the landscape orientation and displaying the first interface in the landscape layout manner includes:
switching the display orientation of the first interface to the landscape orientation, and displaying the first interface in the landscape layout manner on the N+1 sub-display screens; or switching the display orientation of the first interface to the landscape orientation, displaying the first interface in the landscape layout manner on M adjacent sub-display screens in the N+1 sub-display screens, and displaying a third interface on a remaining sub-display screen in the N+1 sub-display screens, where the second interface is an interface associated with the first interface, and M≥2 and is an integer.

For example, as shown in FIG. 13, when detecting an operation of unfolding the foldable-screen electronic device by the user, the multi-fold electronic device switches a display orientation of the interface 1301 to the landscape orientation, displays the interface 1301 in the landscape layout manner on the sub-display screen #1 and the sub-display screen #2, and displays an interface 1302 on the sub-display screen #3. The interface 1302 is also an interface of the video application. For example, the interface 1302 may be a comment interface of the video #1. A display orientation of the interface 1302 may be the portrait orientation.

In some embodiments, the method further includes:
displaying a fourth interface in the landscape layout manner, where when the fourth interface is displayed in the landscape layout manner, the foldable-screen electronic device is in the folded state and the portrait state, and a display orientation of the fourth interface is the portrait orientation; and
switching the display orientation of the fourth interface to the landscape orientation in response to switching from the folded state to the unfolded state.

For example, as shown in (a) and (b) in FIG. 10, when the single-fold electronic device is in both the folded state and the portrait state, the interface 1001 is displayed in the landscape layout manner. In response to switching from the folded state to the unfolded state, the single-fold electronic device may switch a display orientation of the interface 1001 to the landscape orientation.

For another example, as shown in FIG. 11, when the multi-fold electronic device is in both the folded state and the portrait state, the interface 1101 is displayed in the landscape layout manner. In response to switching from the folded state to the unfolded state, the multi-fold electronic device may switch a display orientation of the interface 1101 to the landscape orientation.

The foregoing describes in detail the display method provided in embodiments of this application. In embodiments of this application, unless otherwise stated or there is a logic conflict, terms and/or descriptions in embodiments are consistent and may be mutually referenced, and technical features in different embodiments may be combined based on an internal logical relationship between the technical features, to form a new embodiment.

The foregoing mainly describes, from a perspective of an electronic device, the display method provided in embodiments of this application. It may be understood that to implement the foregoing functions, the electronic device includes a corresponding hardware structure and/or software module for performing each of the functions. It should be readily appreciated by a person skilled in the art that the example algorithm steps described with reference to embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

An embodiment of this application provides a computer program product. When the computer program product is run on an electronic device, the electronic device is enabled to perform the technical solutions in the foregoing embodiments. An implementation principle and technical effects of the computer program product are similar to those in the foregoing method-related embodiments. Details are not described herein.

An embodiment of this application provides a readable storage medium. The readable storage medium includes instructions. When the instructions are run on an electronic device, the electronic device is enabled to perform the technical solutions in the foregoing embodiments. An implementation principle and technical effects of the readable storage medium are similar. Details are not described herein.

An embodiment of this application provides a chip. The chip is configured to execute instructions. When the chip runs, the technical solutions in the foregoing embodiments are performed. An implementation principle and technical effects of the chip are similar. Details are not described herein.

A person of ordinary skill in the art may be aware that the example units and algorithm steps described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that for convenient and brief description, for detailed working processes of the system, apparatus, and unit described above, refer to the corresponding processes in the foregoing method embodiments. Details are not described herein.

In the several embodiments provided in this application, it should be understood that the disclosed system, apparatus, and method may be implemented in other manners. For example, the apparatus embodiment described above is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, that is, may be located at one location, or may be distributed on a plurality of network units. Some or all of the units may be selected based on actual requirements to achieve the objectives of the solutions in embodiments.

**In** addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps in the methods described in embodiments of this application. The storage medium includes any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A display method, wherein the method is applied to a foldable-screen electronic device, and the method comprises:
displaying a first interface in a portrait layout manner, wherein when the first interface is displayed in the portrait layout manner, the foldable-screen electronic device is in a folded state and a portrait state, and a display orientation of the first interface is a portrait orientation;
switching the display orientation of the first interface to a landscape orientation and displaying the first interface in a landscape layout manner in response to switching from the folded state to an unfolded state;
displaying a second interface in the landscape layout manner, wherein when the second interface is displayed in the landscape layout manner, the foldable-screen electronic device is in the unfolded state, and the second interface is in the landscape orientation; and
switching a display orientation of the second interface to the portrait orientation and displaying the second interface in the portrait layout manner in response to switching from the unfolded state to the folded state.

2. The method according to claim 1, wherein after switching the display orientation of the first interface to the landscape orientation and displaying the first interface in the landscape layout manner in response to switching from the folded state to the unfolded state, the method further comprises:
switching the display orientation of the first interface to the portrait orientation and displaying the first interface in the portrait layout manner in response to a rotation angle being greater than or equal to a first threshold.

3. The method according to claim 2, wherein before switching the display orientation of the first interface to the portrait orientation and displaying the first interface in the portrait layout manner, the method further comprises:
determining that the foldable-screen electronic device is a multi-fold electronic device.

4. The method according to claim 2 or 3, wherein after switching the display orientation of the first interface to the portrait orientation and displaying the first interface in the portrait layout manner in response to the rotation angle being greater than or equal to the first threshold, the method further comprises:
switching the display orientation of the first interface to the landscape orientation and displaying the first interface in the landscape layout manner in response to switching from the unfolded state to the folded state.

5. The method according to any one of claims 1 to 4, wherein switching the display orientation of the first interface to the landscape orientation and displaying the first interface in the landscape layout manner in response to switching from the folded state to the unfolded state comprises:
outputting first prompt information in response to switching from the folded state to the unfolded state, wherein the first prompt information is used to prompt a user to confirm whether to switch to the landscape layout manner; and
switching the display orientation of the first interface to the landscape orientation and displaying the first interface in the landscape layout manner in response to an operation of confirming switching to the landscape layout manner by the user.

6. The method according to any one of claims 1 to 4, wherein the first interface is an interface of a first application, and before switching to display the first interface in the landscape layout manner, the method further comprises:
determining that the first application is an application in an allowlist, wherein the allowlist is a list corresponding to an application allowed to automatically switch to the landscape layout manner.

7. The method according to any one of claims 1 to 6, wherein switching the display orientation of the first interface to the landscape orientation and displaying the first interface in the landscape layout manner in response to switching from the folded state to the unfolded state comprises:
changing, in response to switching from the folded state to the unfolded state, orientation data detected by an orientation sensor; and
switching the display orientation of the first interface to the landscape orientation and displaying the first interface in the landscape layout manner in response to a change in the orientation data detected by the orientation sensor.

8. The method according to any one of claims 1 to 7, wherein the foldable-screen electronic device comprises N folding hinges, N≥2 and is an integer, a foldable display screen of the foldable-screen electronic device is divided into N+1 sub-display screens by the N folding hinges, and switching the display orientation of the first interface to the landscape orientation and displaying the first interface in the landscape layout manner comprises:
switching the display orientation of the first interface to the landscape orientation, and displaying the first interface in the landscape layout manner on the N+1 sub-display screens; or
switching the display orientation of the first interface to the landscape orientation, displaying the first interface in the landscape layout manner on M adjacent sub-display screens in the N+1 sub-display screens, and displaying a third interface on a remaining sub-display screen in the N+1 sub-display screens, wherein the third interface is an interface associated with the first interface, and M≥2 and is an integer.

9. The method according to claim 8, wherein the first interface is a play interface of a first video, and the third interface is a comment interface of the first video;
the first interface is a play interface of a first song, and the third interface is a comment interface of the first song; or
the first interface is a main interface of a first commodity, and the third interface is an evaluation interface of the first commodity.

10. The method according to claim 8 or 9, wherein the display orientation of the second interface is the portrait orientation.

11. The method according to any one of claims 1 to 10, wherein the method further comprises:
displaying a fourth interface in the landscape layout manner, wherein when the fourth interface is displayed in the landscape layout manner, the foldable-screen electronic device is in the folded state and the portrait state, and a display orientation of the fourth interface is the portrait orientation; and
switching the display orientation of the fourth interface to the landscape orientation in response to switching from the folded state to the unfolded state.

12. A foldable-screen electronic device, comprising one or more processors and one or more memories, wherein the one or more memories store one or more computer programs, the one or more computer programs comprise instructions, and when the instructions are executed by the one or more processors, the method according to any one of claims 1 to 11 is performed.

13. A computer-readable storage medium, wherein the computer-readable storage medium stores computer instructions, and when the computer instructions are run on a computer, the method according to any one of claims 1 to 11 is performed.

14. A chip, wherein the chip comprises a processor and a communication interface, the communication interface is configured to receive a signal and transmit the signal to the processor, and the processor processes the signal, so that the method according to any one of claims 1 to 11 is performed.

15. A computer program product, wherein when the computer program product is run on a computer, the method according to any one of claims 1 to 11 is performed.
